# EUROPEAN PATENT APPLICATION

(11) **EP 4 224 593 A1**
(43) Date of publication of application: **09.08.2023**
(21) Application number: 21874890.3
(22) Date of filing: 30.07.2021
(51) Int. Cl.: H01M 10/12, H01M 10/18

(54) **BIPOLAR STORAGE BATTERY**

(30) Priority: 30.09.2020 JP 2020165687
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: TANAKA, Akira, Tokyo 100-8322 (JP); ARAGAKI, Masanobu, Tokyo 100-8322 (JP); SUYAMA, Kenichi, Tokyo 100-8322 (JP); NAKAJIMA, Yasuo, Tokyo 100-8322 (JP); TANAKA, Hiroki, Tokyo 100-8322 (JP); TAIRA, Yoshinobu, Jyoban-shimofunao-machi, Iwaki-shi, Fukushima 972-8501 (JP); HIROTA, Kenji, Jyoban-shimofunao-machi, Iwaki-shi, Fukushima 972-8501 (JP)
(74) Representative: Grünecker Patent- und Rechtsanwälte PartG mbB
(86) International application number: PCT/JP2021/028488
(87) International publication number: WO 2022/070587

(57) **Abstract**

Provided is a bipolar battery that can achieve hermetic seal and mechanical strength in both and increase energy density. A bipolar lead acid battery (100) includes an outer wall (112), (122) integrally projected along a peripheral edge on a facing surface of one frame-plate (111), (121) out of frame-plates facing each other; and a joining wall (113), (133) integrally projected on a facing surface of the other frame-plate (111), (131) out of the frame-plates facing each other, the joining wall being positioned inwardly from the outer wall (112), (122) of the one frame-plate (111), (121) and surrounding a peripheral edge of a cell member (140) . The joining wall (113), (133) is joined to the facing surface of the one frame-plate (111), (121) via a joining material (151).

## Description

### Technical Field

The present invention relates to a bipolar battery.

### Background Art

A bipolar battery is configured such that: cell members and substrates made of resin are alternately provided in multiple layers, the cell members each being configured such that an electrolyte layer containing electrolyte such as sulfuric acid is provided between a positive electrode and a negative electrode each having a metal layer made of lead or the like and an active material layer; and a frame made of resin and surrounding a cell is disposed between the substrates facing each other so that the cell members are electrically connected in series to each other (see, for example, PTL 1 and so on).

### Citation List

### Patent Literature

PTL 1: JP 2017-508241 A

### Summary of Invention

### Technical Problem

In the conventional bipolar battery as described above, the substrate is joined to the frame to prevent the electrolyte from leaking outside, and the bipolar battery is stored inside an outer packaging case to prevent a jointed part from stress, and hereby, hermetic seal and mechanical strength are maintained. Accordingly, the conventional bipolar battery as described above causes an increase parts and an increase volume and consequently leads to a decrease in energy density.

In view of this, an object of the present invention is to provide a bipolar battery which can achieve hermetic seal and mechanical strength in both and which can also increase energy density.

### Solution to Problem

A bipolar battery according to the present invention to solve the above problem is a bipolar battery in which cell members are connected in series to each other by alternately stacking the cell members and frame-plates in multiple layers, the cell members each configured such that an electrolyte layer is provided between a positive electrode and a negative electrode, the frame-plates being made of resin and configured such that the cell members are accommodated in the frame plates. The bipolar battery includes: an outer wall integrally projected along a peripheral edge on a facing surface of one frame plate out of frame plates facing each other; and a joining wall integrally projected on a facing surface of the other frame-plate out of the frame-plates facing each other, the joining wall being positioned inwardly from the outer wall of the one frame-plate and surrounding a peripheral edge of a corresponding one of the cell members. The joining wall of the other frame-plate is joined to the facing surface of the one frame-plate via a joining material.

### Advantageous Effects of Invention

With the bipolar battery according to the present invention, the outer wall is projected along the peripheral edge of the frame-plate, the joining wall is projected inwardly from the outer wall, and the joining wall is joined to the facing surface of the frame-plate via the joining material. Accordingly, it is possible to prevent electrolyte from leaking outside and to prevent a joining-material part from stress, and consequently, it is possible to maintain hermetic seal and mechanical strength. As a result, it is not necessary to accommodate the bipolar battery inside an outer packaging case or the like, and therefore, it is possible to reduce the parts and to achieve compactification of the bipolar battery. Thus, it is possible to achieve hermetic seal and mechanical strength in both and to increase energy density.

### Brief Description of Drawings

FIG. 1 is a sectional view illustrating a schematic structure of a first embodiment of a bipolar battery according to the present invention;
FIG. 2 is a sectional view illustrating a schematic structure of a second embodiment of the bipolar battery according to the present invention; and
FIG. 3 is a sectional view illustrating a schematic structure of a third embodiment of the bipolar battery according to the present invention.

### Description of Embodiments

Embodiments of a bipolar battery according to the present invention will be described with reference to the drawings, but the present invention is not limited only to the embodiments to be described below with reference to the drawings.

### <First Embodiment>

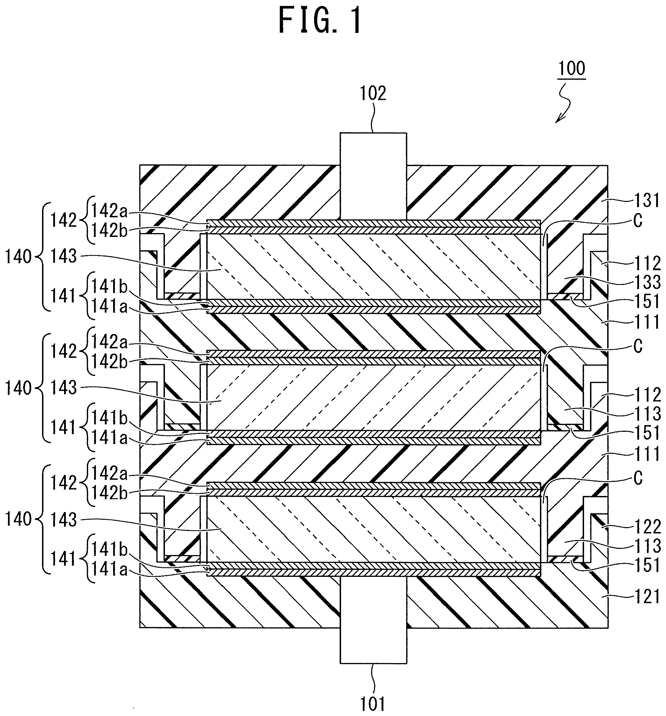

A first embodiment of the bipolar battery according to the present invention will be described with reference to FIG. 1.

As illustrated in FIG. 1, inside a bipolar lead acid battery 100 according to the present embodiment, a plurality of substrates 111 each serving as a frame-plate forming a square flat plate shape and made of thermoplastic resin having sulfuric-acid resistance (e.g., polyethylene, polypropylene, polystyrene, polyvinyl chloride, polymethylmethacrylate (acryl resin), acrylonitrile-butadiene-styrene copolymer (ABS), polyamide (nylon), polycarbonate, and so on) is arranged to face each other at intervals. On one end side (in FIG. 1, a lower end side) in an arrangement direction of the substrates 111 of the bipolar lead acid battery 100, a first end plate 121 serving as a frame-plate forming a square flat plate shape and made of thermoplastic resin having sulfuric-acid resistance is arranged similarly to the substrates 111. On the other end side (in FIG. 1, an upper end side) in the arrangement direction of the substrates 111 of the bipolar lead acid battery 100, a second end plate 131 serving as a frame-plate forming a square flat plate shape and made of thermoplastic resin having sulfuric-acid resistance is arranged similarly to the substrates 111.

On the other surfaces (in FIG. 1, upper surfaces) of the substrates 111 and the first end plate 121, positive-electrode lead layers 141a made of lead or lead alloy, provided as metal layers for positive electrode, are disposed respectively. On the positive-electrode lead layers 141a, positive active material layers 141b containing an active material are disposed respectively. A positive electrode 141 is formed by the positive-electrode lead layer 141a and the positive active material layer 141b.

On one surfaces (in FIG. 1, lower surfaces) of the substrates 111 and the second end plate 131, negative-electrode lead layers 142a made of lead or lead alloy, provided as metal layers for negative electrode, are disposed respectively. On the negative-electrode lead layers 142a, negative active material layers 142b containing an active material are disposed respectively. A negative electrode 142 is formed by the negative-electrode lead layer 142a and the negative active material layer 142b.

An electrolyte layer 143 such as a glass-fiber mat impregnated with electrolyte such as sulfuric acid is disposed between the positive electrode 141 and the negative electrode 142. Cell members 140 are each formed by the positive electrode 141, the negative electrode 142, and the electrolyte layer 143. The cell members 140 are electrically connected in series to each other by well-known means. For example, the substrate 111 includes means via which the positive-electrode lead layer 141a is electrically connected to the negative-electrode lead layer 142a. Note that, in FIG. 1, 101 indicates a positive electrode terminal, and 102 indicates a negative electrode terminal.

That is, the cell members 140 are connected in series to each other such that the cell members 140 and the frame-plates 111, 121, 131 are alternately stacked, the cell members 140 being each configured such that the electrolyte layer 143 is provided between the positive electrode 141 and the negative electrode 142, the frame-plates 111, 121, 131 being made of resin and configured such that the cell members 140 are accommodated in the frame-plates 111, 121, 131.

On the other surfaces (in FIG. 1, the upper surfaces) of the substrates 111, respective outer walls 112 made of thermoplastic resin having sulfuric-acid resistance and forming a square frame shape along respective peripheral edges are integrally projected. On the one surfaces (in FIG. 1, the lower surfaces) of the substrates 111, respective joining walls 113 made of thermoplastic resin having sulfuric-acid resistance are integrally projected such that the respective joining walls 113 are positioned closer to the inner side of the substrates 111 than the respective outer walls 112 on the other surfaces (in FIG. 1, the upper surfaces) of the substrates 111 to surround respective peripheral edges of the cell members 140.

On the other surface (in FIG. 1, the upper surface) of the first end plate 121, an outer wall 122 made of thermoplastic resin having sulfuric-acid resistance and forming a square frame shape along a peripheral edge of the first end plate 121 is integrally projected. On the one surface (in FIG. 1, the lower surface) of the second end plate 131, a joining wall 133 made of thermoplastic resin having sulfuric-acid resistance is integrally projected such that the joining wall 133 is positioned closer to the inner side of the substrate 111 facing the second end plate 131 than the outer wall 112 on the other surface (in FIG. 1, the upper surface) of the substrate 111 and surrounds the peripheral edge of the cell member 140.

That is, the outer wall 112, 122 is integrally projected along the peripheral edge on a facing surface (in FIG. 1, an upper surface) of one frame-plate 111, 121 (in FIG. 1, on the lower side) out of frame-plates facing each other, and the joining wall 113, 133 is integrally projected on a facing surface (in FIG. 1, on a lower surface) of the other frame-plate 111, 131 (in FIG. 1, on the upper side) out of the frame-plates facing each other such that the joining wall 113, 133 is positioned inwardly from the outer wall 112, 122 of the one frame-plate 111, 121 (in FIG. 1, on the lower side) and surrounds the peripheral edge of the cell member 140 are provided.

A distal end (in FIG. 1 a bottom end) of the joining wall 133 of the second end plate 131 is joined to the other surface (in FIG. 1, the upper surface) of the substrate 111 facing the second end plate 131, via an adhesive (e. g., an epoxy resin adhesive) 151 with sulfuric-acid resistance and provided as a joining material. A distal end (in FIG. 1, a bottom end) of the joining wall 113 of the substrate 111 facing the first end plate 121 is joined to the other surface (in FIG. 1, the upper surface) of the first end plate 121 via the adhesive 151. A distal end (in FIG. 1, a bottom end) of the joining wall 113 of the other substrate 111 (in FIG. 1, on the upper side) out of the substrates 111 facing each other is joined to the other surface (in FIG. 1, the upper surface) of one substrate 111 (in FIG. 1, on the lower side) via the adhesive 151.

That is, the joining wall 113, 133 of the other frame-plate 111, 131 (in FIG. 1, on the upper side) is joined to the facing surface (in FIG. 1, the upper surface) of the one frame-plate 111, 121 (in FIG. 1, on the lower side) via the adhesive (a joining material) 151.

Respective gaps are formed between the outer wall 122 of the first end plate 121 and the one surface (in FIG. 1, the lower surface) of the substrate 111 facing the first end plate 121 and between the outer wall 122 and the joining wall 113. Respective gaps are formed between the one surface (in FIG. 1, the lower surface) of the second end plate 131 and the outer wall 112 of the substrate 111 facing the second end plate 131 and between the outer wall 112 and the joining wall 133 of the second end plate 131. Respective gaps are formed between the outer wall 112 of the one substrate 111 (in FIG. 1, on the lower side) out of the substrates 111 facing each other and the one surface (in FIG. 1, the lower surface) of the other substrate 111 (in FIG. 1, on the upper side) and between the outer wall 112 and the joining wall 113.

That is, a gap is formed between the outer wall 112, 122 of the one frame-plate 111, 121 (in FIG. 1, on the lower side) and the facing surface (in FIG. 1, the lower surface) of the other frame-plate 111, 131 (in FIG. 1, on the upper side), and a gap is formed between the outer wall 112, 122 of the one frame-plate 111, 121 (in FIG. 1, on the lower side) and the joining wall 113, 133 of the other frame-plate 111, 131 (in FIG. 1, on the upper side).

Note that, in the present embodiment, each space surrounded and partitioned by the frame-plates 111, 121, 131 facing each other, the joining wall 113, 133, and the adhesive 151 serves as a cell C, and the cell member 140 is accommodated in the cell C.

In the bipolar lead acid battery 100 according to the present embodiment, the joining wall 113, 133 is joined to the facing surface (the other surface) of the substrate 111 or the first end plate 121 facing the joining wall 113, 133 via the adhesive 151. This makes it possible to prevent the electrolyte contained in the electrolyte layer 143 from leaking outside. Further, since the outer wall 112 is provided in a projecting manner along the peripheral edge on the facing surface (the other surface) of the substrate 111 or the first end plate 121, it is possible to prevent the adhesive 151 from stress being applied from outside, and consequently, it is possible to maintain hermetic seal and mechanical strength.

Accordingly, in the bipolar lead acid battery 100 according to the present embodiment, it is not necessary to accommodate the bipolar lead acid battery 100 inside an outer packaging case or the like, and therefore, it is possible to reduce the parts and to achieve compactification of the bipolar lead acid battery 100.

Accordingly, with the bipolar lead acid battery 100 according to the present embodiment, it is possible to achieve hermetic seal and mechanical strength in both and to increase energy density.

That is, in the bipolar lead acid battery 100, the outer wall 112, 122 is projected along the peripheral edge of the frame-plate 111, 121, the joining wall 113, 133 is projected inwardly from the outer wall 112, 122, and the joining wall 113, 133 is joined to the facing surface of the frame-plate 111, 121 via the joining material (adhesive) 151. Hereby, it is possible to prevent the electrolyte from leaking outside and to prevent the joining-material 151 from stress being applied from outside, and consequently, it is possible to maintain hermetic seal and mechanical strength. As a result, it is not necessary to accommodate the bipolar lead acid battery 100 inside an outer packaging case or the like, and therefore, it is possible to reduce the parts and to achieve compactification of the bipolar lead acid battery 100. Consequently, it is possible to achieve hermetic seal and mechanical strength in both and to increase energy density.

Further, a gap is formed between the outer wall 112, 122 and the facing surface (the one surface) of the substrate 111 or the second end plate 131 facing the outer wall 112, 122, and a gap is formed between the outer wall 112, 122 and the joining wall 113, 133. Consequently, the outer wall 112, 122 easily bends, and this makes it possible to relieve stress applied from outside and to further reduce external stress to be applied to the adhesive-151 part.

### <Second Embodiment>

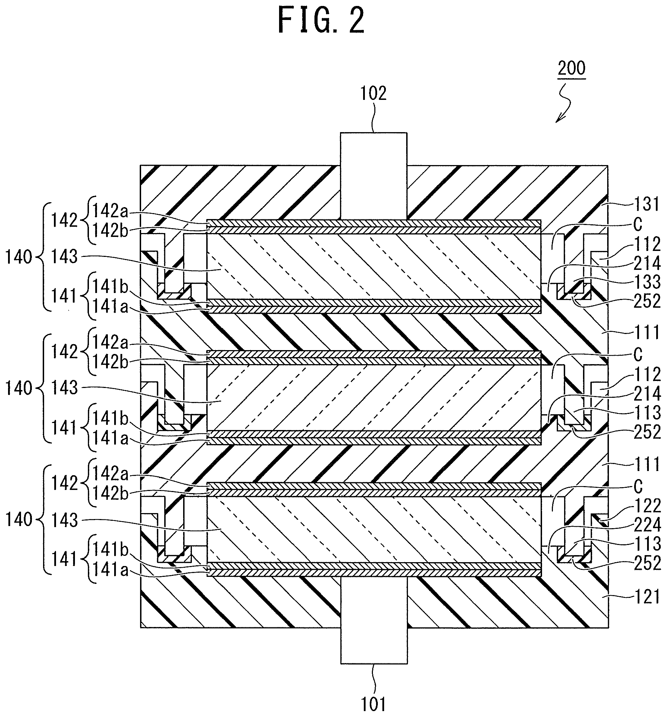

A second embodiment of the bipolar battery according to the present invention will be described with reference to FIG. 2. Note that, as for a part similarly to a part in the aforementioned embodiment, a reference sign similar to a reference sign used in the description of the aforementioned embodiment is used, and a redundant description similar to the description made in the aforementioned embodiment is omitted.

As illustrated in FIG. 2, on the other surface (in FIG. 2, the upper surface) of the substrate 111 of a bipolar lead acid battery 200 according to the present embodiment, an inner wall 214 made of thermoplastic resin having sulfuric-acid resistance is integrally projected such that the inner wall 214 is positioned closer to the inner side of the substrate 111 than the joining wall 113 on the one surface (in FIG. 2, the lower surface) of the substrate 111 and surrounds the peripheral edge of the cell member 140.

On the other surface (in FIG. 2, the upper surface) of the first end plate 121, an inner wall 224 made of thermoplastic resin having sulfuric-acid resistance is integrally projected such that the inner wall 224 is positioned closer to the inner side of the first end plate 121 from the outer wall 112 on the one surface (in FIG. 2, the lower surface) of the substrate 111 facing the first end plate 121 and surrounds the peripheral edge of the cell member 140.

That is, the inner wall 214, 224 integrally projected on the facing surface (in FIG. 2, the upper surface) of the one frame-plate 111, 121 (in FIG. 2, on the lower side) is provided such that the inner wall 214, 224 is positioned inwardly from the joining wall 113, 133 of the other frame-plate 111, 131 (in FIG. 2, on the upper side) out of the frame-plates and surrounds the peripheral edge of the cell member 140.

A distal end side (in FIG. 2, the lower end side) of the joining wall 113, 133 is joined to the facing surface (the other surface) of the substrate 111 or the first end plate 121 facing the joining wall 113, 133, to the outer wall 112, 122, and to the inner wall 214, 224 via a fusing material 252 that is a joining material made of thermoplastic resin that is the same material as the substrate 111, the first end plate 121, and the joining walls 113, 133.

That is, the joining wall 113, 133 of the other frame-plate 111, 131 (in FIG. 2, on the upper side) is joined to the facing surface (in FIG. 2, the upper surface) of the one frame-plate 111, 121 (in FIG. 2, on the lower side) via the fusing material (the joining material) 252. Further, the distal end side (in FIG. 2, the lower end side) of the joining wall 113, 133 is joined to the outer wall 112, 122, and the distal end side (in FIG. 2, the lower end side) of the joining wall 113, 133 is joined to the inner wall 214, 224, both via the fusing material (the joining material) 252.

Note that, in the present embodiment, each space partitioned by the frame plates 111, 121, 131 facing each other, the joining wall 113, 133, the inner wall 214, 224, and the fusing material 252 serves as the cell C and surrounds the cell member 140.

In the bipolar lead acid battery 200 according to the present embodiment, the distal end side (in FIG. 2, the lower end side) of the joining wall 113, 133 is inserted between the outer wall 112, 122 and the inner wall 214, 224 in a pressed manner and is vibrated against the other surface (in FIG. 2, the upper surface) of the substrate 111 or the first end plate 121, so that frictional heat is generated (friction of vibration) . Hereby, the distal end side of the joining wall 113, 133 and an other-surface part of the substrate 111 or the first end plate 121 that is between the outer wall 112, 122 and the inner wall 214, 224 melt to generate a molten material and turn into the fusing material 252.

That is, the fusing material 252 is a molten material generated by friction of vibration between the joining wall 113, 133 of the other frame-plate 111, 131 (in FIG. 2, on the upper side) and the facing surface (in FIG. 2, the upper surface) of the one frame-plate 111, 121 (in FIG. 2, on the lower side).

Then, the fusing material 252 fuses the distal end side of the joining wall 113, 133 to the other-surface part of the substrate 111 or the first end plate 121 and also enters between the distal end side of the joining wall 113, 133 and the outer wall 112, 122 or the inner wall 214, 224 such that the distal end side of the joining wall 113, 133 is joined to the outer wall 112, 122 or the inner wall 214, 224 (vibration welding).

In the bipolar lead acid battery 200 manufactured by vibration welding about the present embodiment, the distal end side of the joining wall 113, 133 is joined to the inner wall 214, 224 and the outer wall 112, 122 as well as the distal end of the joining wall 113, 133 is joined to the facing surface (the other surface) of the substrate 111 or the first end plate 121, and hereby, a joining range of the joining wall 113, 133 can be increased, and the joining strength can be further increased.

Accordingly, with the bipolar lead acid battery 200 according to the present embodiment, it is possible to yield an effect similar to that of the aforementioned first embodiment, and further, it is possible to more reliably prevent the electrolyte contained in the electrolyte layer 143 from leaking outside while stress from outside is buffered.

<Third Embodiment>

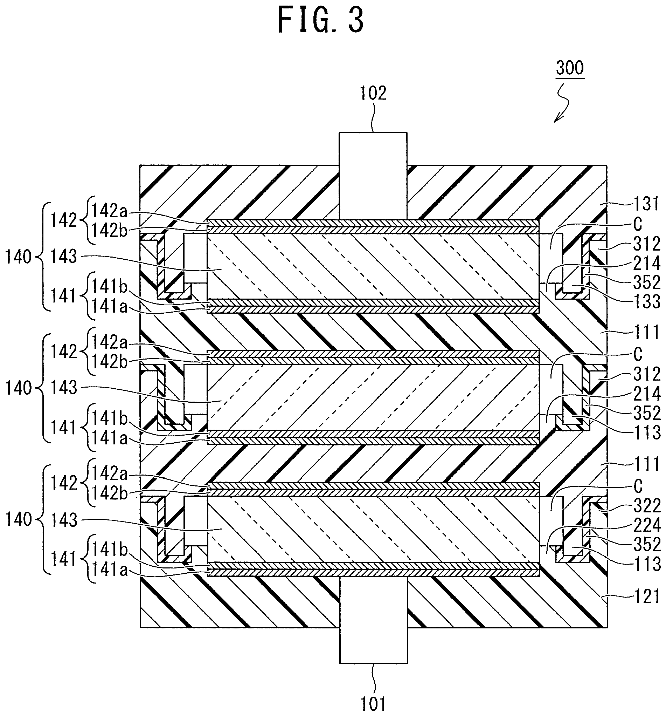

A third embodiment of the bipolar battery according to the present invention will be described with reference to FIG. 3. Note that, as for a part similarly to a part in the aforementioned embodiment, a reference sign similar to a reference sign used in the description of the aforementioned embodiment is used, and a redundant description similar to the description made in the aforementioned embodiment is omitted.

As illustrated in FIG. 3, on the other surface (in FIG. 3, the upper surface) of the substrate 111 of a bipolar lead acid battery 300 according to the present embodiment, an outer wall 312 made of thermoplastic resin having sulfuric-acid resistance and forming a square frame shape along the peripheral edge of the substrate 111 is integrally projected. On the other surface (in FIG. 3, the upper surface) of the first end plate 121, an outer wall 322 made of thermoplastic resin having sulfuric-acid resistance and forming a square frame shape along the peripheral edge of the first end plate 121 is integrally projected.

The distal end (in FIG. 3, the lower end) of the joining wall 113, 133 is joined to the other surface (in FIG. 3, the upper surface) of the substrate 111 or the first end plate 121, an inner surface of the outer wall 312, 322 is joined to an outer surface of the joining wall 113, 133, an outer surface of the inner wall 214, 224 is joined to an inner surface of the joining wall 113, 133, and a distal end (in FIG. 3, an upper end) of the outer wall 312, 322 is joined to the one surface (in FIG. 3, the lower surface) of the substrate 111 or the second end plate 131, all via a fusing material 352 that is a joining material made of thermoplastic resin that is the same material as the substrate 111, the first end plate 121, the second end plate 131, the joining wall 113, 133, and the outer wall 312, 322.

That is, the joining wall 113, 133 of the other frame-plate 111, 131 (in FIG. 3, on the upper side) is joined to the facing surface (in FIG. 3, the upper surface) of the one frame-plate 111, 121 (in FIG. 3, on the lower side) . The outer wall 312, 322 of the one frame-plate 111, 121 (in FIG. 3, on the lower side) is joined to the joining wall 113, 133 of the other frame-plate 111, 131 (in FIG. 3, on the upper side). The inner wall 214, 224 of the one frame-plate 111, 121 (in FIG. 3, on the lower side) is joined to the joining wall 113, 133 of the other frame-plate 111, 131 (in FIG. 3, on the upper side). And the outer wall 312, 322 of the one frame-plate 111, 121 (in FIG. 3, on the lower side) is joined to the facing surface (in FIG. 3, the lower surface) of the other frame-plate 111, 131 (in FIG. 3, on the upper side), all via the fusing material 352.

Note that, in the present embodiment, each space partitioned by the frame plates 111, 121, 131 facing each other, the joining wall 113, 133, the inner wall 214, 224, and the fusing material 352 serves as the cell C and surrounds the cell member 140.

In the bipolar lead acid battery 300 according to the present embodiment, when the distal end side (in FIG. 3, the lower end side) of the joining wall 113, 133 is inserted between the outer wall 312, 322 and the inner wall 214, 224 in a pressed manner, the distal end (in FIG. 3, the upper end) of the outer wall 312, 322 is pressed against the one surface (in FIG. 3, the lower surface) of the substrate 111 or the second end plate 131.

Then, when the substrate 111 or the second end plate 131 is vibrated against the substrate 111 or the first end plate 121 facing the substrate 111 or the second end plate 131, frictional heat is generated between the distal end of the joining wall 113, 133 and the facing surface (the other surface) of the substrate 111 or the first end plate 121 and between the distal end of the outer wall 312, 322 and the facing surface (the one surface) of the substrate 111 or the second end plate 131 (friction of vibration).

Hereby, the distal end (in FIG. 3, the bottom end) of the joining wall 113, 133 and an other-surface part (in FIG. 3, an upper-surface part) of the substrate 111 or the first end plate 121 that faces the distal end melt to generate a molten material, and the distal end (in FIG. 3, the upper end) of the outer wall 312, 322 and a one-surface part (in FIG. 3, a lower-surface part) of the substrate 111 or the second end plate 131 that faces the distal end melt to generate a molten material, so that a fusing material 352 is formed.

That is, the fusing material 352 is a molten material generated by friction of vibration between the joining wall 113, 133 of the other frame-plate 111, 131 (in FIG. 3, on the upper side) and the facing surface (in FIG. 3, the upper surface) of the one frame-plate 111, 121 (in FIG. 3, on the lower side) and between the outer wall 312, 322 of the one frame-plate 111, 121 (in FIG. 3, on the lower side) and the facing surface (in FIG. 3, the lower surface) of the other frame-plate 111, 131 (in FIG. 3, on the upper side).

Then, the fusing material 352 fuses the distal end of the joining wall 113, 133 to a facing-surface part (the other-surface part) of the substrate 111 or the first end plate 121, fuses the distal end of the outer wall 312, 322 to a facing-surface part (the one-surface part) of the substrate 111 or the second end plate 131, and also enters between the joining wall 113, 133 and the outer wall 312, 322 or the inner wall 214, 224 such that the joining wall 113, 133 is joined to the outer wall 312, 322 or the inner wall 214, 224 (vibration welding).

In the bipolar lead acid battery 300 manufactured by vibration welding about the present embodiment, the distal end of the joining wall 113, 133 is joined by vibration welding , and further, the distal end of the outer wall 312, 322 is also welded by vibration such that the outer wall 312, 322 can be joined to the joining wall 113, 133 for overall length as well as the distal end of the outer wall 312, 322.

Accordingly, in the bipolar lead acid battery 300 according to the present embodiment, it is possible to further increase the joining range (area) of the joining wall 113, 133 as compared with the bipolar lead acid battery 200 according to the aforementioned second embodiment.

Accordingly, in the bipolar lead acid battery 300 according to the present embodiment, although the buffering capacity of the outer wall 112, 122 against stress from outside is decreased, it is possible to further increase the joining strength of the joining wall 113, 133 as compared with the bipolar lead acid battery 200 according to the aforementioned second embodiment.

### <Other Embodiments>

Note that the bipolar battery according to the present invention is not limited to the bipolar lead acid batteries 100, 200, 300 according to the aforementioned embodiments. As other embodiments, for example, as for the fusing material 252, 352 of the bipolar lead acid batteries 200, 300 according to the second, third embodiment, welding may be performed by generating a fusing material by other welding processing such as thermal welding by a hot plate or infrared heating, or solvent dissolution, instead of the vibration welding.

Further, a bipolar battery may be configured by replacing the adhesive 151 of the bipolar lead acid battery 100 according to the first embodiment with the fusing material 252, 352 of the bipolar lead acid batteries 200, 300 according to the second, third embodiment. Further, a bipolar battery may be configured by replacing the fusing material 252, 352 of the bipolar lead acid batteries 200, 300 according to the second, third embodiment with the adhesive 151 of the bipolar lead acid battery 100 according to the first embodiment.

That is, a bipolar battery can be configured by appropriately changing or replacing various technical matters of the bipolar lead storage batteries 100, 200, 300 according to the aforementioned embodiments.

Further, the electrical conduction method included in the substrate 111 is not limited to a specific method. For example, when the entire of the substrate contains conductive particles or conductive fiber, both sides of the substrate can be electrically connected. Further, a conductive member enabling electrical conduction can be incorporated into the substrate.

### Industrial Applicability

Since the bipolar battery according to the present invention can achieve hermetic seal and mechanical strength in both and also increase energy density, the bipolar battery can be used quite effectively for an industrial purpose.

### Reference Signs List

- 100: bipolar lead acid battery
- 101: positive electrode terminal
- 102: negative electrode terminal
- 111: substrate
- 112: outer wall
- 113: joining wall
- 121: first end plate
- 122: outer wall
- 131: second end plate
- 133: joining wall
- 140: cell member
- 141: positive electrode
- 141a: positive-electrode lead layer
- 141b: positive active material layer
- 142: negative electrode
- 142a: negative-electrode lead layer
- 142b: negative active material layer
- 143: electrolyte layer
- 151: adhesive
- 200: bipolar lead acid battery
- 214: inner wall
- 224: inner wall
- 252: fusing material
- 300: bipolar lead acid battery
- 312: outer wall
- 322: outer wall
- 352: fusing material
- C: cell

## Claims

1. A bipolar battery in which cell members are connected in series to each other by alternately stacking the cell members and frame-plates in multiple layers, the cell members each configured such that an electrolyte layer is provided between a positive electrode and a negative electrode, the frame-plates being made of resin and configured such that the cell members are accommodated in the frame plates, the bipolar battery comprising:
an outer wall integrally projected along a peripheral edge on a facing surface of one frame plate out of frame plates facing each other; and
a joining wall integrally projected on a facing surface of the other frame-plate out of the frame-plates facing each other, the joining wall being positioned inwardly from the outer wall of the one frame-plate and surrounding a peripheral edge of a corresponding one of the cell members, wherein the joining wall of the other frame-plate is joined to the facing surface of the one frame-plate via a joining material.

2. The bipolar battery according to claim 1, wherein the joining material is provided between the outer wall of the one frame-plate and the joining wall of the other frame plate.

3. The bipolar battery according to claim 1 or 2, comprising an inner wall integrally projected on the facing surface of the one frame-plate, the inner wall being positioned inwardly from the joining wall of the other frame-plate and surrounding the peripheral edge of the corresponding one of the cell members, wherein the inner wall of the one frame-plate is joined to the joining wall of the other frame-plate via the joining material.

4. The bipolar battery according to any one of claims 1 to 3, wherein a gap is formed between the outer wall of the one frame-plate and the facing surface of the other frame-plate.

5. The bipolar battery according to any one of claims 1 to 4, wherein the joining material is an adhesive or a fusing material.

6. The bipolar battery according to claim 5, wherein the fusing material is a molten material generated by welding processing between the joining wall of the other frame-plate and the facing surface of the one frame-plate.

7. The bipolar battery according to any one of claims 1 to 3, wherein the outer wall of the one frame-plate is joined to the facing surface of the other frame-plate via the joining material.

8. The bipolar battery according to claim 7, wherein the joining material is an adhesive or a fusing material.

9. The bipolar battery according to claim 8, wherein the fusing material is a molten material generated by welding processing between the joining wall of the other frame-plate and the facing surface of the one frame-plate and between the outer wall of the one frame-plate and the facing surface of the other frame-plate.

10. The bipolar battery according to any one of claims 1 to 9, wherein the resin is thermoplastic resin.
